# EUROPÄISCHE PATENTANMELDUNG

(11) **EP 3 093 960 A1**
(43) Veröffentlichungstag der Anmeldung: **16.11.2016**
(21) Anmeldenummer: 15167159.1
(22) Anmeldetag: 11.05.2015
(51) Int. Cl.: H02K 1/27, H02K 1/30, H02K 15/12

(54) **ROTOR MIT EINEM RINGMAGNETEN UND EINEM KUNSTSTOFFTEIL**

(71) Anmelder: Siemens Aktiengesellschaft, 80333 München (DE)
(72) Erfinder: Bott, Erich, 97618 Hollstadt (DE); Seufert, Reiner, 97616 Salz (DE); Vollmer, Rolf, 36129 Gersfeld (DE)

(57) **Zusammenfassung**

Die Erfindung betrifft einen Rotor (1,401,601,801) für eine elektrische Maschine (61,64,66,68), der zur Vermeidung von durch Temperaturänderungen hervorgerufenen Schädigungen des Rotors (1,401,601,801) eine Tragvorrichtung (2,402,602,802) aufweist, umfassend einen Ringmagneten (3,403,603), der sich entlang einer Drehachse (4) des Rotors (1,401,601,801) erstreckt, wobei sich die Tragvorrichtung (2,402,602,802) zum drehfesten Verbinden einer Welle (13,413,613,813) mit dem Ringmagneten (3,403,603) entlang der Drehachse (4) des Rotors (1,401,601,801) erstreckt, wobei der Ringmagnet (3,403,603) und die Tragvorrichtung (2,402,602,802) eine gemeinsame Grenzfläche (5,405,605) aufweisen, durch die eine flächige Verbindung zwischen dem Ringmagneten (3,403,603) und der Tragvorrichtung (2,402,602,802) gebildet ist, wobei die Tragvorrichtung (2,402,602,802) an der Grenzfläche (5,405,605) durch ein Teil (6,406,606) aus einem Kunststoff gebildet ist und eine elektrische Maschine (61,64,66,68) für einen Industrieeinsatz, insbesondere in einer Werkzeugmaschine, Produktionsmaschine oder Industrieroboter, umfassend den Rotor (1,401,601,801), sowie ein Verfahren zur Herstellung des Rotors (1,401,601,801) und eine Verwendung eines Ringmagneten (3,403,603) für den Rotor (1, 401, 601, 801).

## Beschreibung

Die Erfindung betrifft einen Rotor für eine elektrische Maschine gemäß dem Oberbegriff des Anspruchs 1. Die Erfindung betrifft auch eine elektrische Maschine für einen Industrieeinsatz, insbesondere in einer Werkzeugmaschine, Produktionsmaschine oder Industrieroboter, die den Rotor umfasst, sowie ein Verfahren zur Herstellung des Rotors und eine Verwendung eines Ringmagneten für den Rotor.

Ein derartiger Rotor ist aus der DE 101 53 433 A1 bekannt, der einen Träger aufweist, an dem eine Befestigung eines Ringmagneten geschaffen ist, wobei der Träger eine temperaturunabhängige definierte Vorspannung gewährleistet, um somit ein Reißen des Ringmagneten zu verhindern. Dies wird erreicht, indem der Träger Mittel aufweist, die eine nahezu temperaturunabhängige definierte Vorspannung zur Fixierung des Ringmagneten auf dem Träger erzeugen, wobei der Träger eine gegenüber dem Ringmagneten höheren Wärmeausdehnungskoeffizienten aufweist. Dabei wird der den Träger umgebende Ringmagnet durch den Träger auch bei unterschiedlichen Temperaturen und den damit verbundenen Ausdehnungen des Trägers auf gleiche Vorspannungskräfte beansprucht, so dass ein Reißen aufgrund zu hoher radialer Kräfte, die sich im Ringmagneten als Zugspannung bemerkbar machen, vermieden wird. Es wird dort nicht, wie vorher üblich, versucht, den Ringmagneten für höhere Zug- bzw. Tangentialspannungen auszulegen, sondern der den Ringmagneten haltende Träger wird durch Aussparungen in mehrere in Umfangsrichtung aufeinander folgende Teilbereiche unterteilt, so dass bei Ausweitung des Trägers, insbesondere durch thermische Vorgänge im Ringmagneten, keine unzulässigen Tangentialspannungen auftreten können. Die Teilbereiche sind jeweils durch konstruktive bzw. geometrische Maßnahmen des Trägers in die Lage versetzt, der Aufweitung des Ringmagneten elastisch spielfrei zu folgen, ohne den Ringmagneten auf zusätzliche Zug- bzw. Tangentialspannungen zu beanspruchen. Falls eine zusätzliche Haftung der Ringmagnete am Träger erwünscht ist, wird zwischen Ringmagnete und Träger ein Kleber eingesetzt. In den Patentansprüchen der genannten Veröffentlichung wird eine Verwendung der Anordnung mit dem Ringmagneten und dem Träger bei Antrieben von Werkzeugmaschinen und/oder Produktionsmaschinen angegeben.

Der Erfindung liegt die Aufgabe zugrunde, einen technischen Beitrag zu einem Rotor für eine elektrische Maschine zu leisten, mit der der Rotor kostengünstig und in einer hohen Qualität zur Verfügung gestellt werden kann.

Die Aufgabe wird durch einen Rotor mit den Merkmalen des Anspruchs 1 gelöst.

Ein erfindungsgemäßer Rotor für eine elektrische Maschine, der zur Vermeidung von durch Temperaturänderungen hervorgerufenen Schädigungen des Rotors eine Tragvorrichtung aufweist, umfasst
- einen Ringmagneten, der sich entlang einer Drehachse des Rotors erstreckt,
- wobei sich die Tragvorrichtung zum drehfesten Verbinden einer Welle mit dem Ringmagneten entlang der Drehachse des Rotors erstreckt,
- wobei der Ringmagnet und die Tragvorrichtung eine gemeinsame Grenzfläche aufweisen, durch die eine flächige Verbindung zwischen dem Ringmagneten und der Tragvorrichtung gebildet wird,
- wobei die Tragvorrichtung an der Grenzfläche durch ein Teil aus einem Kunststoff gebildet ist.

Die Aufgabe wird auch durch eine elektrische Maschine für einen Industrieeinsatz, insbesondere in einer Werkzeugmaschine, Produktionsmaschine oder Industrieroboter, mit den Merkmalen des Anspruchs 13 gelöst.

Eine erfindungsgemäße elektrische Maschine für einen Industrieeinsatz, insbesondere in einer Werkzeugmaschine, Produktionsmaschine oder in einem Industrieroboter, umfasst einen erfindungsgemäßen Rotor und
- einen Stator, der in einem Betrieb der elektrischen Maschine über einen Luftspalt mit dem Rotor magnetisch zusammenwirkt,
- wobei der Rotor um die Drehachse drehbar gelagert ist.

Die Aufgabe wird auch durch ein Verfahren mit den Merkmalen nach Anspruch 14 gelöst.

Bei einem erfindungsgemäßen Verfahren zur Herstellung eines erfindungsgemäßen Rotors für eine elektrische Maschine wird die flächige Verbindung zwischen dem Ringmagneten des Rotors und der Tragvorrichtung des Rotors an der gemeinsamen Grenzfläche des Ringmagneten und der Tragvorrichtung gebildet, wobei die Tragvorrichtung an der Grenzfläche mit dem Teil aus dem Kunststoff gebildet wird.

Die Aufgabe wird auch durch eine Verwendung eines Ringmagneten nach Anspruch 15 gelöst. Bei einer erfindungsgemäßen Verwendung eines Ringmagneten für einen erfindungsgemäßen Rotor wird der Ringmagnet bei dem Rotor verwendet, der zur Vermeidung von durch Temperaturänderungen hervorgerufenen Schädigungen des Rotors die Tragvorrichtung aufweist, wobei die Tragvorrichtung des Rotors an der gemeinsamen Grenzfläche mit dem Ringmagneten durch das Teil aus dem Kunststoff gebildet wird.

Die Aufgabe wird erfindungsgemäß vorteilhaft gelöst, indem die Tragvorrichtung an der Grenzfläche durch das Teil aus dem Kunststoff gebildet ist. Weiterhin vorteilhaft kann das Teil aus dem Kunststoff an der Grenzfläche bei einem erfindungsgemäßen Rotor durch Temperaturänderungen hervorgerufene Schädigungen des Rotors vorteilhaft vermeiden.

Querschnittsebenen eines erfindungsgemäßen Rotors verlaufen senkrecht zu der Drehachse. Radiale Richtungen sind Richtungen, die senkrecht zu der Drehachse in den Querschnittsebenen verlaufen. Der Ringmagnet erstreckt sich entlang der Drehachse von seinem ersten axialen Ende zu seinem zweiten axialen Ende. Der Ringmagnet weist zwei Seiten auf, nämlich eine Innenseite und eine Außenseite. Die Flächen der beiden Seiten werden an den beiden axialen Enden des Ringmagnets durch Stirnflächen verbunden.

Die gemeinsame Grenzfläche kann sich entlang der Drehachse erstrecken. So kann ein erfindungsgemäßer Rotor vorteilhaft kostengünstig in einer hohen Qualität zur Verfügung gestellt werden, da bei einem vorteilhaft geringen zusätzlichen Platzbedarf eine große flächige Verbindung zwischen dem Ringmagneten und der Tragvorrichtung gebildet wird. Insbesondere kann sich hierzu das Teil entlang der gemeinsamen Grenzfläche in einer Richtung parallel zur Drehachse erstrecken.

Das Teil kann sich in einer Umfangsrichtung um die Drehachse entlang der gemeinsamen Grenzfläche erstrecken. So kann ein erfindungsgemäßer Rotor vorteilhaft kostengünstig in einer hohen Qualität zur Verfügung gestellt werden, da die flächige Verbindung sich über eine gesamte Fläche des Ringmagneten in der Umfangsrichtung vorteilhaft erstreckt.

Das Teil kann das Merkmal aufweisen, dass es sich nicht über beide Seiten des Ringmagnets vollständig erstreckt. So kann ein erfindungsgemäßer Rotor vorteilhaft kostengünstig in einer hohen Qualität zur Verfügung gestellt werden, da das Teil aus dem Kunststoff in vorteilhaft einfacher Weise hergestellt werden kann.

Ein erfindungsgemäßer Rotor kann an einer Welle befestigt in einer erfindungsgemäßen elektrischen Maschine mithilfe einer ersten Lagervorrichtung und einer zweiten Lagervorrichtung um die Drehachse drehbar gelagert werden.

In einem Betrieb einer erfindungsgemäßen elektrischen Maschine mit einem erfindungsgemäßen Rotor als Generator wird der Rotor durch mechanische Energie in eine Drehung um die Drehachse versetzt. Durch das magnetische Zusammenwirken zwischen magnetischen Polen des Rotors und des Stator über einen Luftspalt kann die mechanische Energie in elektrische Energie umgewandelt werden. Die elektrische Energie kann an mindestens einer Wicklung, die am Stator befestigt ist und zu einer Bildung der magnetischen Pole des Stators beiträgt, durch Anschließen eines elektrischen Verbrauchers entnommen werden. Eine der beiden Seiten des Ringmagnets weist eine Luftspaltfläche auf, die dem Luftspalt zugewandt ist und sich in der Umfangsrichtung um die Drehachse erstreckt.

Bei einem Betrieb einer erfindungsgemäßen elektrischen Maschine mit einem erfindungsgemäßen Rotor als Motor wird über die mindestens eine Wicklung elektrische Energie zugeführt und durch das magnetische Zusammenwirken zwischen den magnetischen Polen des Stators und eines erfindungsgemäßen Rotors über den Luftspalt elektrische Energie in mechanische Energie umgewandelt. Dabei wird ein Drehmoment erzeugt, dass den Rotor in Drehung um die Drehachse versetzen kann und es kann an der Welle mechanische Energie an einen mechanischen Verbraucher in Form einer Drehbewegung abgegeben werden.

Eine erfindungsgemäße elektrische Maschine für einen Industrieeinsatz, insbesondere in einer Werkzeugmaschine, Produktionsmaschine oder in einem Industrieroboter weist den weiteren Vorteil auf, dass diese dort vorteilhaft kostengünstig in einer hohen Qualität verwendet werden kann. Das Teil an der Grenzfläche vermeidet vorteilhaft durch Temperaturänderungen hervorgerufene Schädigungen des Rotors in einem Betrieb einer erfindungsgemäßen elektrischen Maschine, wenn der Rotor Bestandteil dieser elektrischen Maschine für den Industrieeinsatz, insbesondere in einer Werkzeugmaschine, einer Produktionsmaschine oder in einem Industrieroboter ist. Die elektrische Maschine ist für den Industrieeinsatz geeignet, wenn der Rotor mindestens die Wärmeklasse F nach DIN EN 60 034 oder vergleichbare Normen erfüllt. Ein Industrieeinsatz in einer Werkzeugmaschine, Produktionsmaschine oder Industrieroboter ist unter vorteilhafter Vermeidung von durch Temperaturänderungen hervorgerufenen Schädigungen des Rotors z.B. möglich, wenn bei dem Rotor nach dessen Warmlagerung über einen Zeitraum von 1000 Stunden bei 155° C der Festsitz des Ringmagneten auf der Tragvorrichtung bzw. der Welle im Betrieb einer elektrischen Maschine mit diesem Rotor unter den Anforderungen der Betriebsbedingungen in Werkzeugmaschinen, Produktionsmaschinen oder Industrierobotern (z.B. 1,6fache des Maximalmoments, Rüttel- und Schockfestigkeit) noch gewährleistet ist.

Ein erfindungsgemäßes Verfahren zur Herstellung eines erfindungsgemäßen Rotors weist den weiteren Vorteil auf, dass ein erfindungsgemäßer Rotor durch das Teil der Tragvorrichtung an der Grenzfläche vorteilhaft kostengünstig in einer hohen Qualität hergestellt werden kann.

Eine erfindungsgemäße Verwendung eines Ringmagneten für einen erfindungsgemäßen Rotor weist den weiteren Vorteil auf, dass abhängig von der geometrischen Form eine der Tragvorrichtung zugewandten Seite des Ringmagneten einen erfindungsgemäßen Rotor vorteilhaft kostengünstig in einer hohen Qualität in einer Ausgestaltung des Rotors gemäß der Erfindung verwendet werden kann.

Vorteilhafte Ausgestaltungen der Erfindung sind in den abhängigen Ansprüchen angegeben. Es wird hierbei ein technischer Beitrag zur vorteilhaften Ausgestaltung einer erfindungsgemäßen Rotors geleistet, um einen Rotor kostengünstig und in einer hohen Qualität zur Verfügung stellen zu können.

So ist eine Ausgestaltung eines erfindungsgemäßen Rotors vorteilhaft, bei der der Kunststoff einen Duroplasten aufweist. So kann bei einem erfindungsgemäßen Rotor eine Rißbildung im Kunststoffteil durch Temperaturänderungen vorteilhaft vermieden werden. Durch den Duroplasten kann bei vorteilhaft niedrigen Materialkosten eine durch Temperaturänderungen hervorgerufene Schädigung des Rotors, insbesondere eine die flächige Verbindung schädigende Rißbildung, vorteilhaft vermieden werden.

In einer weiteren vorteilhaften Ausgestaltung eines erfindungsgemäßen Rotors ist der Ringmagnet ein gesinterter Magnet und der Kunststoff weist einen linearen Wärmeausdehnungskoeffizienten zwischen -2 x 10⁻⁶/K und 14 x 10⁻⁶/K auf. So kann bei einem erfindungsgemäßen Rotor durch Temperaturänderungen hervorgerufene Schädigungen des Rotors vorteilhaft vermieden werden, indem der gesinterte Magnet und der Kunststoff ähnliche Wärmeausdehnungskoeffizienten vorteilhaft aufweisen. Es kann so ein Brechen des spröden Materials vom gesinterten Magneten, insbesondere hervorgerufen durch Temperaturänderungen des Rotors, vorteilhaft vermieden werden. Der gesinterte Magnet kann vorteilhaft durch Sintern eines Magnetmaterials mit einer hohem Remanenz und Koerzitivfeldstärke hergestellt werden. So kann vorteilhaft ein erfindungsgemäßer Rotor für eine erfindungsgemäße elektrische Maschine mit hoher Leistungsfähigkeit bei vorteilhaft kleinen Abmessungen, d.h. kompakt, zur Verfügung gestellt werden. Es kann so vorteilhaft aus allen gesinterten Magnetarten ein gesinterter Magnet als Ringmagnet vorhanden sein. Gesinterte Magnetarten sind z.B. gesinterte Ferritmagnete, gesinterte AlNiCo-Magnete oder gesinterte Seltenerdmagnete, wie z.B. gesinterte Samarium-Cobalt-Magnete oder gesinterte Neodym-Eisen-Bor-Magnete. Diese weisen einen linearen Wärmeausdehnungskoeffizienten zwischen -2 x 10⁻⁶/K und 14 x 10⁻⁶/K auf.

Der Ringmagnet kann ein anisotroper Magnet sein. Ein erfindungsgemäßer Rotor kann vorteilhaft einen Ringmagnet aufweisen, der entlang seines Umfangs Bereiche verschiedener Vorzugsrichtungen aufweist, insbesondere auch Bereiche, die in mindestens einer Vorzugsrichtung von der radialen Richtung abweichen. Anisotrope Magnete werden in einem Magnetfeld geformt und alle Einbereichsteile dadurch in die spätere Magnetisierungsrichtung gedreht. Sie haben in der Vorzugsrichtung sehr gute magnetische Eigenschaften und erreichen im Vergleich zu isotropen Magneten annähernd den doppelten magnetischen Fluss. Bei einem erfindungsgemäßen Rotor kann ein Brechen des aufgrund seiner Anisotropie inhomogenen Ringmagnets vorteilhaft vermieden werden.

In einer weiteren vorteilhaften Ausgestaltung eines erfindungsgemäßen Rotors weist der Kunststoff einen Füllstoff auf. So kann bei einem erfindungsgemäßen Rotor durch Temperaturänderungen hervorgerufene Schädigungen des Rotors vorteilhaft vermieden werden, indem der Kunststoff mithilfe des Füllstoffs einen ähnlichen Wärmeausdehnungskoeffizienten wie der Ringmagnet vorteilhaft aufweist und eine Schädigung des Rotors durch Abreißen der flächigen Verbindung durch Temperaturänderungen vorteilhaft vermieden wird. Ein Abreißen kann z.B. dadurch eintreten, dass aufgrund der mechanischen Beanspruchung des Rotors im Betrieb und den auftretenden Temperaturänderungen ein Schwund des Kunststoffs auftritt.

In einer weiteren vorteilhaften Ausgestaltung eines erfindungsgemäßen Rotors weist der Rotor die Welle aus einem metallischen Werkstoff auf, wobei die Tragvorrichtung mit der Welle verbunden ist und die Welle innerhalb des Ringmagneten angeordnet ist, wobei sich die Welle entlang der Drehachse erstreckt. So kann bei einem erfindungsgemäßen Rotor eine kostengünstige Welle vorteilhaft verwendet werden und vorteilhaft dabei das Kunststoffteil an der Grenzfläche eine durch Temperaturänderungen hervorgerufene Schädigung des Rotors vorteilhaft vermeiden, insbesondere wenn die Tragvorrichtung außer dem Kunststoff höchstens noch metallische Werkstoffe umfasst.

In einer weiteren vorteilhaften Ausgestaltung eines erfindungsgemäßen Rotors weist der Rotor die Welle aus einem faserverstärkten Kunststoff auf, wobei die Tragvorrichtung mit der Welle verbunden ist und die Welle innerhalb des Ringmagneten angeordnet ist, wobei sich die Welle entlang der Drehachse erstreckt. So kann bei einem erfindungsgemäßen Rotor eine gewichtsarme Welle vorteilhaft verwendet werden und vorteilhaft dabei das Kunststoffteil an einer Grenzfläche zwischen der Tragvorrichtung und der Welle durch Temperaturänderungen hervorgerufene Schädigungen des Rotors vorteilhaft vermeiden, insbesondere wenn die Tragvorrichtung aus dem Teil besteht und stoffschlüssig mit der Welle verbunden ist. Insbesondere kann der faserverstärkte Kunststoff der Welle durch lange Fasern vorteilhaft verstärkt sein, insbesondere mit einer Länge größer als 50 mm, um eine ausreichende Steifigkeit und Festigkeit der Welle zur Übertragung des Drehmoments in einem Betrieb einer erfindungsgemäßen elektrischen Maschine vorteilhaft zu erreichen.

In einer weiteren vorteilhaften Ausgestaltung eines erfindungsgemäßen Rotors ist die Tragvorrichtung in einem Schrumpfpress-Verfahren oder einem Klebeverfahren mit dem Ringmagneten und/oder der Welle verbunden. Mit dem Schrumpfpressverfahren kann ein erfindungsgemäßer Rotor durch das Kunststoffteil vorteilhaft kostengünstig in einer hohen Qualität zur Verfügung gestellt werden. Dabei wird bei einem erfindungsgemäßen Verfahren zur Herstellung eines erfindungsgemäßen Rotors die Tragvorrichtung abgekühlt und die Tragvorrichtung in dem Ringmagneten angeordnet und/oder die Welle abgekühlt und in der Tragvorrichtung angeordnet. Nachdem sich die Tragvorrichtung und/oder die Welle wieder erwärmt hat, ist an der gemeinsamen Grenzfläche und/oder an der Grenzfläche zwischen der Tragvorrichtung und der Welle, insbesondere bei einem ähnlichen Wärmeausdehnungskoeffizienten der Welle und/oder des Ringmagneten und der Tragvorrichtung, die insbesondere das Kunststoffteil ist, eine vorteilhaft beständige flächige Verbindung vorhanden, die sich, insbesondere bei ähnlichen Wärmeausdehnungskoeffizienten, nur durch größere Unterschiede in der Temperatur des Kunststoffteils und des Ringmagneten lösen lässt.

Bei dem Klebeverfahren kann ein erfindungsgemäßer Rotor durch das Teil vorteilhaft kostengünstig in einer hohen Qualität zur Verfügung gestellt werden. Dabei wird bei einem erfindungsgemäßen Verfahren zur Herstellung eines erfindungsgemäßen Rotors an der gemeinsamen Grenzfläche und/oder einer Grenzfläche zwischen der Tragvorrichtung und der Welle eine Klebeschicht mit einem Klebstoff ausgebildet. Eine Klebeschicht zum drehfesten Verbinden zweier Bestandteile eines Rotors ist dünn, d.h. mit einer Dicke von 0,1 bis 0,2 mm ausgeführt. Die Klebeschicht zum drehfesten Verbinden zweier Bestandteile des Rotors ist somit im allgemeinen kleiner als 0,5 mm ausgeführt, um eine feste, beständige Verbindung zwischen zwei Bestandteilen des Rotors zu erreichen. Es kann vorteilhaft ein Klebstoff verwendet werden, der einen ähnlichen idealen Wärmeausdehnungskoeffizienten wie der Kunststoff des Teils aufweist, oder bei Rotoren mit im Vergleich zu der Dicke der Klebeschicht sehr großen Durchmesser ein Klebstoff verwendet werden, der für einen so großen Durchmesser eine ausreichende drehfeste Verbindung im Betrieb einer erfindungsgemäßen elektrischen Maschine vorteilhaft ermöglicht. Bei dem großen Durchmesser wirkt sich eine Dickenänderung der Klebeschicht aufgrund der Wärmeausdehnung vorteilhaft gering aus.

Bei den erfindungsgemäßen Ausgestaltungen mit dem Schrumpfpressverfahren oder dem Klebeverfahren kann vorteilhaft eine erfindungsgemäße Verwendung eines Ringmagneten erfolgen, dessen der Tragvorrichtung zugewandte Seite eine vorgegebene Maßhaltigkeit aufweist, die insbesondere durch mechanische Bearbeitung vorhanden ist. Die vorgeschriebene Maßhaltigkeit ermöglicht vorteilhaft eine große flächige Verbindung bei dem Schrumpfpressverfahren und eine gleichmäßige Dicke der Klebeschicht von 0,1 mm bis 0,2 mm entlang des Umfangs des Rotors.

In einer weiteren vorteilhaften Ausgestaltung eines erfindungsgemäßen Rotors ist der Kunststoff auf die Welle gespritzt. So kann bei einem erfindungsgemäßen Rotor vorteilhaft durch das Spritzen des Kunststoffs auf die Welle in hoher Qualität ausgeführt werden. Vorteilhaft kann dabei der Ringmagnet als letzter zu montierender Bestandteil des Rotors, insbesondere durch das Schrumpfpress-Verfahren oder das Klebeverfahren angebracht werden.

Die Welle kann eine formschlüssige Vorrichtung aufweisen, die sich an einer Grenzfläche zu dem Kunststoff in einer Querschnittsebene bis zum Ringmagneten erstrecken kann. Indem bei einer vorteilhaften Ausgestaltung eines erfindungsgemäßen Verfahren eine Position einer Vorrichtung zum Aufspritzen des Kunststoffs in Richtung der Drehachse entlang der Welle geändert werden kann, kann vorteilhaft ohne Behinderung des Aufspritzens durch die formschlüssige Vorrichtung das Teil aus dem Kunststoff auf der Welle hergestellt werden. Eine Erstreckung des Teils in der Umfangsrichtung kann bei einer vorteilhaften Ausgestaltung eines erfindungsgemäßen Verfahrens vorteilhaft erreicht werden, indem die Welle beim Aufspritzen um ihre Längsachse, d.h. ihre Drehachse gedreht wird.

In einer weiteren vorteilhaften Ausgestaltung eines erfindungsgemäßen Rotors ist der Kunststoff an der gemeinsamen Grenzfläche auf den Ringmagneten aufgespritzt. So kann vorteilhaft ein erfindungsgemäßer Rotor ohne Welle vorgefertigt werden und abhängig von dessen Verwendung später eine geeignete Welle durch das Schrumpfpress- oder das Klebeverfahren angebracht werden. Vorteilhaft kann vor dem Aufspritzen der Ringmagnet eine Beschichtung aufweisen, um eine Haftung zwischen dem Kunststoff und dem Ringmagneten vorteilhaft zu verbessern.

In einer weiteren vorteilhaften Ausgestaltung eines erfindungsgemäßen Rotors weist der Rotor einen entlang der Grenzfläche verlaufenden radialen Spalt g auf, der mindestens 0,5 mm breit ist und mit dem Kunststoff ausgefüllt ist. So kann ein erfindungsgemäßer Rotor aufgrund des radialen Spalts g mit mindestens 0,5 mm vorteilhaft zur Verfügung gestellt werden. Der radiale Spalt ermöglicht aufgrund seiner gegenüber einem Klebespalt größeren Breite ein vorteilhaft einfacheres Ausfüllen des radialen Spalts bei einem erfindungsgemäßen Verfahren und ermöglicht vorteilhaft ein Ausgleichen einer schlechten Maßhaltigkeit des Ringmagneten, um eine hohe Konzentrizität der Luftspaltfläche des Ringmagnets zur Drehachse vorteilhaft zu erreichen. Der radiale Spalt ermöglicht auch vorteilhaft Ringmagnete zu verwenden, die an ihrer der Tragvorrichtung zugewandten Seite keine Fase aufweisen. Die erfindungsgemäß verwendeten Ringmagnete können auch eine Beschichtung an einer Seite aufweisen, um vorteilhaft eine bessere Haftung zwischen dem Kunststoff und dem Ringmagnet zu erreichen.

Der radiale Spalt kann durch Spritzgießen ausgefüllt sein. Vorteilhaft ermöglicht der radiale Spalt mit der Mindestbreite von 0,5 mm ein Ausfüllen des radialen Spalts durch Spitzgießen des Kunststoffs, insbesondere wenn der Kunststoff ein Duroplast ist.

Der Ringmagnet kann eine laterale Magnetisierung aufweisen, wobei die Magnetisierung im Ringmagneten von einem Südpol zu einem benachbarten Nordpol verläuft und auf einer Seite des Ringmagneten der Nord- und Südpol vorhanden ist. So kann ein erfindungsgemäßer Rotor vorteilhaft eine große Erstreckung des radialen Spalts aufweisen, da innerhalb des Rotors der notwendige magnetische Rückschluss zwischen den dem Luftspalt benachbarten Nord- und Südpolen innerhalb des Ringmagnets erfolgt.

Bei der Ausgestaltung eines erfindungsgemäßen Rotors mit einem radialen Spalt g, der mindestens 0,5 mm breit ist, kann vorteilhaft eine erfindungsgemäße Verwendung eines Ringmagneten erfolgen, der an einer seiner Seiten eine geringe Maßhaltigkeit aufweist, insbesondere indem diese Seite mechanisch unbearbeitet ist.

Es kann auch vorteilhaft ein Ringmagnet verwendet werden, der an den Übergängen zwischen den Stirnflächen und der Seite keine Fase aufweist. So kann zumindest auf das Anbringen einer Fase an den Übergang zwischen den Stirnflächen und der Seite vorteilhaft verzichtet werden.

In einer weiteren vorteilhaften Ausgestaltung eines erfindungsgemäßen Rotors weist der Rotor den entlang der Grenzfläche verlaufenden radialen Spalt g auf, der mindestens 0,8 mm breit ist und mit dem Kunststoff ausgefüllt ist. So kann ein erfindungsgemäßer Rotor vorteilhaft zur Verfügung gestellt werden, da der radiale Spalt eine Breite aufweist, die vorteilhaft ein Spritzgießen des Kunststoffs an die Grenzfläche ermöglicht, insbesondere wenn der Kunststoff ein Duroplast mit einem Füllstoff ist.

In einer weiteren vorteilhaften Ausgestaltung eines erfindungsgemäßen Rotors besteht die Tragvorrichtung aus dem Teil. So kann ein erfindungsgemäßer Rotor vorteilhaft zur Verfügung gestellt werden, indem die Tragvorrichtung als ein komplettes Teil aus dem Kunststoff vorteilhaft hergestellt werden kann.

Die Tragvorrichtung kann durch Spritzgießen des Kunststoffs hergestellt sein. So kann ein erfindungsgemäßer Rotor vorteilhaft hergestellt werden. Hierzu kann bei einem erfindungsgemäßen Verfahren der Ringmagnet in ein Spritzgusswerkzeug eingelegt werden und das Teil durch Spritzgießen an der Grenzfläche gebildet werden, wobei das Spritzgusswerkzeug zum Formen der Tragvorrichtung mit dem Kunststoff gefüllt wird. Es kann so eine hohe Konzentrizität der Luftspaltfläche des Ringmagnets zur Drehachse vorteilhaft erreicht werden. Weiterhin vorteilhaft sind keine hohen Toleranzanforderungen durch die Welle an der Grenzfläche zur Tragvorrichtung zu erfüllen.

In einer weiteren vorteilhaften Ausgestaltung eines erfindungsgemäßen elektrischen Maschine, ist die elektrische Maschine ein Servomotor, wobei die elektrische Maschine einen Geber zum Erfassen einer Winkelposition, einer Drehgeschwindigkeit und/oder einer Beschleunigung der Welle bei ihrer Drehbewegung um die Drehachse aufweist. So kann vorteilhaft eine erfindungsgemäße elektrische Maschine mit einem erfindungsgemäßen Rotor eine Drehbewegung mit hoher Dynamik und Präzision erreicht werden, um in einer Werkzeugmaschine, Produktionsmaschine oder einem Industrieroboter eine gewünschte Position der Welle vorteilhaft zu erreichen.

Vorteilhafte Ausgestaltungen erfindungsgemäßer Rotoren, elektrischer Maschinen sowie Verfahren und Verwendungen ergeben sich vorteilhaft durch Kombination einiger oder mehrerer verschiedener Merkmale. Insbesondere vorteilhaft können alle Ausgestaltungen eines erfindungsgemäßen Rotors, erfindungsgemäßer elektrischer Maschinen oder Verwendungen das Teil aus dem Kunststoff umfassen, der ein Duroplast aufweist. Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die anhand der Figuren näher erläutert werden.

Es zeigen:
- FIG 1: ein erstes Ausführungsbeispiel eines erfindungsgemäßen Rotors,
- FIG 2: ein Querschnitt des Rotors gemäß der FIG 1,
- FIG 3: ein viertes Ausführungsbeispiel eines erfindungsgemäßen Rotors,
- FIG 4: ein sechstes Ausführungsbeispiel eines erfindungsgemäßen Rotors,
- FIG 5: ein achtes Ausführungsbeispiel eines erfindungsgemäßen Rotors,
- FIG 6: Ausführungsbeispiele elektrischer Maschinen.

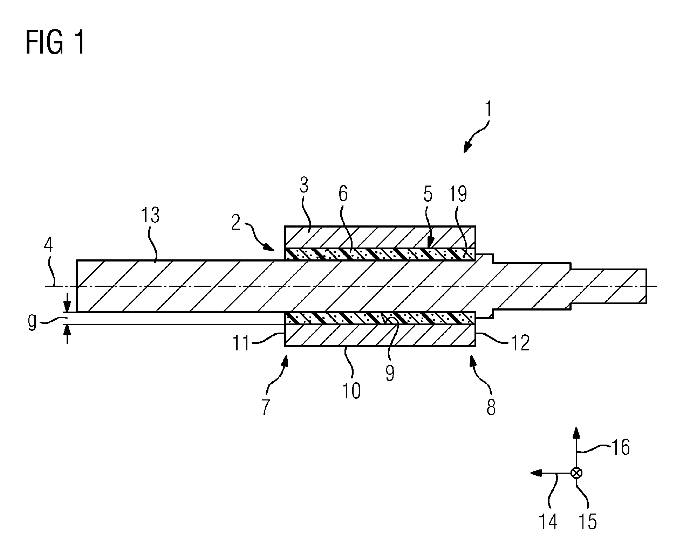

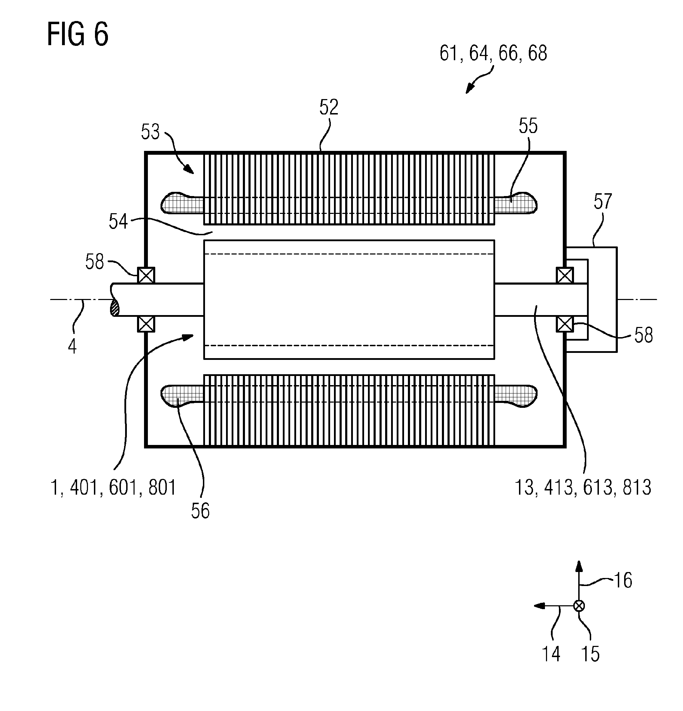

FIG 1 zeigt ein erstes Ausführungsbeispiel eines Rotors 1 für eine elektrische Maschine 60 (Bezugszeichen 60 in FIG 6), der zur Vermeidung von durch Temperaturänderungen hervorgerufenen Schädigungen des Rotors 1 eine Tragvorrichtung 2 aufweist. Der Rotor 1 umfasst einen Ringmagneten 3, der sich entlang einer Drehachse 4 des Rotors 1 erstreckt, wobei sich die Tragvorrichtung 2 zum drehfesten Verbinden einer Welle 13 mit dem Ringmagneten 3 entlang der Drehachse 4 des Rotors 1 erstreckt. Der Ringmagnet 3 und die Tragvorrichtung 2 weisen eine gemeinsame Grenzfläche 5 auf, durch die eine flächige Verbindung zwischen dem Ringmagneten 3 und der Tragvorrichtung 2 gebildet ist. Die Tragvorrichtung 2 ist an der Grenzfläche 5 durch ein Teil 6 aus einem Kunststoff gebildet. Der Ringmagnet 3 erstreckt sich entlang der Drehachse 4 von seinem ersten axialen Ende 7 zu seinem zweiten axialen Ende 8. Der Ringmagnet weist zwei Seiten 9, 10 auf, nämlich eine Innenseite 9 und eine Außenseite 10. Die Flächen der beiden Seiten 9,10 werden an den beiden axialen Enden 7,8 des Ringmagnets 3 durch Stirnflächen 11,12 verbunden. Die gemeinsame Grenzfläche 5 erstreckt sich entlang der Drehachse 4. Das Teil 6 erstreckt sich entlang der gemeinsamen Grenzfläche 5 in einer Richtung 14 parallel zur Drehachse 4.

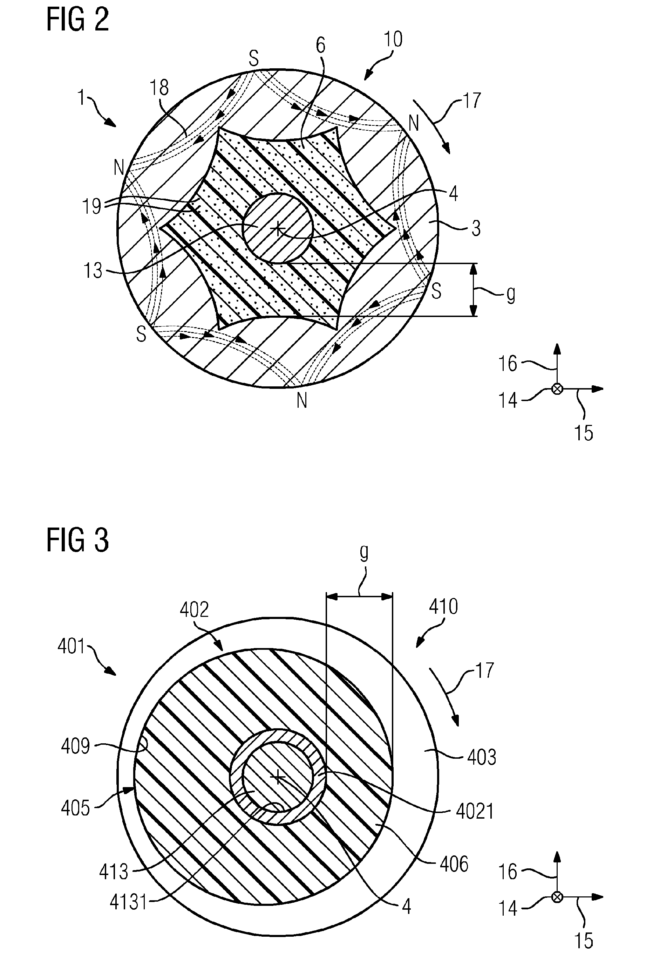

FIG 2 zeigt einen Querschnitt des Rotors 1 gemäß FIG 1, wobei Querschnittsebenen des Rotors 1 senkrecht zu der Drehachse 4 verlaufen. Radiale Richtungen 15,16 sind Richtungen, die senkrecht zu der Drehachse 4 in den Querschnittsebenen verlaufen. Das Teil 6 erstreckt sich in einer Umfangsrichtung 17 um die Drehachse 4 entlang der gemeinsamen Grenzfläche 5. So erstreckt sich die flächige Verbindung über eine gesamte Fläche des Ringmagneten 3, nämlich der Fläche der Innenseite 9, in der Umfangsrichtung 17. Das Teil 6 erstreckt sich nicht über beide Seiten 9,10 des Ringmagneten, d.h. nicht über die Innenseite 9 und die Außenseite 10. Das Teil 6 ist aus einem Kunststoff, der einen Duroplasten und einen Füllstoff 19 aufweist. In dem ersten Ausführungsbeispiel des Rotors 1 gemäß FIG 1 weist der Kunststoff ein Epoxidharz und ein Quarzmehl auf. Der Ringmagnet 3 ist ein gesinterter Samarium-Cobalt-Magnet, der anisotrop ist. Samarium-Cobalt-Magnete erzeugen einen hohen magnetischen Fluss, so dass diese vorteilhaft für einen Rotor einer leistungsstarken elektrischen Maschine eingesetzt werden können. Der Kunststoff aus dem Epoxidharz und dem Quarzmehl weist einen linearen Wärmeausdehnungskoeffizient zwischen -2 x 10⁻⁶/K und 14 x 10⁻⁶/K auf. Der Rotor 1 weist die Welle 13 aus einem metallischen Werkstoff auf, der in dem ersten Ausführungsbeispiel des Rotors 1 Stahl ist. Die Tragvorrichtung 2 ist mit der Stahlwelle 13 verbunden und die Welle 13 ist innerhalb des Ringmagneten 3 angeordnet, wobei sich die Welle 13 entlang der Drehachse 4 erstreckt. Der Ringmagnet 3 weist eine laterale Magnetisierung 18 auf, wobei diese im Ringmagneten von einem Südpol S zu einem benachbarten Nordpol N verläuft und auf einer Seite 10 des Ringmagneten 3 der Nord- und Südpol N,S vorhanden ist. Der Rotor 1 weist einen entlang der Grenzfläche 5 verlaufenden radialen Spalt g auf, der mindestens 0,8 mm breit ist und mit dem Kunststoff ausgefüllt ist. In FIG 2 ist der radiale Spalt g an seiner engsten Stelle bemaßt. Dort beträgt die Breite des radialen Spalts mindestens 0,8 mm, wobei die Breite des radialen Spalts g in dem ersten Ausführungsbeispiel mindestens 4 mm beträgt. Die Tragvorrichtung 2 des ersten Ausführungsbeispiels des Rotors 1 besteht aus dem Teil 6.

Bei einem ersten Ausführungsbeispiel zur Herstellung des Rotors 1 wird die flächige Verbindung zwischen dem Ringmagneten 3 des Rotors 1 und der Tragvorrichtung 2 des Rotors 1 an der gemeinsamen Grenzfläche 5 des Ringmagneten 3 und der Tragvorrichtung 2 gebildet, wobei die Tragvorrichtung 2 an der Grenzfläche 5 mit dem Teil 6 aus dem Kunststoff gebildet wird. Bei dem ersten Ausführungsbeispiel des Rotors 1 gemäß FIG 2 ist die Tragvorrichtung 2 durch Spritzgießen des Kunststoffs hergestellt. Hierzu wird bei dem ersten Ausführungsbeispiel des Verfahrens der Ringmagnet 3 in ein Spritzgusswerkzeug eingelegt und das Teil 6 durch Spritzgießen an der Grenzfläche 5 gebildet, wobei das Spritzgusswerkzeug zum Formen der Tragvorrichtung 2 mit dem Kunststoff gefüllt wird.

Bei einem ersten Ausführungsbeispiel einer Verwendung eines Ringmagneten 3 für einen Rotor 1 wird der Ringmagnet 3 bei dem Rotor 1 verwendet, wobei der Rotor 1 zur Vermeidung von durch Temperaturänderungen hervorgerufene Schädigungen die Tragvorrichtung 2 aufweist, wobei die Tragvorrichtung 2 des Rotors 1 an der gemeinsamen Grenzfläche 5 mit dem Ringmagneten 3 durch das Teil 6 aus dem Kunststoff gebildet ist. Das erste Ausführungsbeispiel des Rotors 1 weist eine Ausgestaltung auf, bei der Ringmagnete verwendet werden können, die an ihrer der Tragvorrichtung 2 zugewandten Seite 9 keine Fase aufweisen. Bei dem Rotor 1 ist die der Tragvorrichtung 2 zugewandte Seite 9 die Innenseite des Ringmagneten 3. Bei dem ersten Ausführungsbeispiel einer Verwendung eines Ringmagneten 3 kann so ein Ringmagnet 3 mit einer geometrischen Form eines anisotropen Magneten verwendet werden, dessen der Tragvorrichtung 2 zugewandte Seite 9 weder eine mechanische Nachbearbeitung nach dem Sintern des Ringmagneten 3, noch einem Anbringen einer Fase an der zugewandten Seite erfährt.

Bei den ersten Ausführungsbeispielen wird an der gemeinsamen Grenzfläche 5 die flächige Verbindung zwischen dem Ringmagneten 3 und der Tragvorrichtung 2 durch das Spritzgießen des Kunststoffs an die Grenzfläche 5 unterstützt. Durch das Spritzgießen ist zumindest zwischen dem Kunststoff und dem Ringmagneten 3 eine Adhäsion vorhanden.

In einem zweiten Ausführungsbeispiel des Rotors 1 eines Verfahrens zur Herstellung des Rotors 1 und einer Verwendung des Ringmagneten 3 weist der Ringmagnet 3 an seiner der Tragvorrichtung 2 zugewandten Seite eine Beschichtung auf. So wird eine bessere Haftung zwischen dem Ringmagneten und dem Kunststoff erreicht, die zumindest zwischen der Beschichtung und dem Kunststoff eine Verbindung ausbilden kann, die mit einer auf atomaren Kräften beruhenden Verbindung vergleichbar ist.

Bei einem dritten Ausführungsbeispiel eines Rotors 1 ist der Rotor 1, d.h. die Tragvorrichtung 2 und der Ringmagnet 3, an einer Edelstahlwelle anstatt einer Stahlwelle gemäß dem ersten Ausführungsbeispiel der FIG 1, 2 befestigt. So kann der Rotor 1 gemäß dem dritten Ausführungsbeispiel bei Anwendungen eingesetzt werden, bei denen der Rotor 1 in Flüssigkeiten oder Gasen läuft. Dies ist z.B. der Fall, wenn eine elektrische Maschine eine Pumpe ist und den Rotor 1 aufweist.

FIG 3 zeigt ein viertes Ausführungsbeispiel eines erfindungsgemäßen Rotors 401. Das vierte Ausführungsbeispiel weist Merkmale auf, die anhand der FIG 1 und 2 beschrieben wurden. Diese sind in FIG 3 nicht mit Bezugszeichen versehen, könnten aber mit den gleichen Bezugszeichen wie in FIG 1 und 2 versehen werden und mit deren Beschreibung beschrieben werden. Auf die dazu unterschiedlichen Merkmale wird nachfolgend anhand der FIG 3 eingegangen. In dem vierten Ausführungsbeispiel des Rotors 401 ist der Kunststoff ein Duroplast, der ein Phenol-Formaldehydharz ist. Der Ringmagnet 403 ist ein gesinterter Neodym-Eisen-Bor-Magnet und weist eine Innenseite 409 auf, die in einer Querschnittsebene des Rotors 401 bzw. des Ringmagneten 403 nicht konzentrisch zu einer Außenseite 410 des Ringmagneten 403 ist. Gesinterte Neodym-Eisen-Bor-Magnete erzeugen einen hohen magnetischen Fluss, so dass diese vorteilhaft für einen Rotor einer leistungsstarken elektrischen Maschine eingesetzt werden können.

In einem vierten Ausführungsbeispiel einer Verwendung kann so der Ringmagnet 403 bei einer Ausgestaltung des Rotors 401 verwendet werden, bei der die Tragvorrichtung 402 an einer gemeinsamen Grenzfläche 405 mit dem Ringmagneten in einem Querschnitt des Rotors 401 nicht konzentrisch zur Drehachse 4 verläuft. In dem vierten Ausführungsbeispiel des Rotors 401 ist die Tragvorrichtung 402 in einem Schrumpfpressverfahren mit der Welle 413 verbunden. Die Tragvorrichtung 402 weist eine Hülse 4021 auf, die sich entlang der Drehachse 4 und einem Teil 406 aus dem Kunststoff erstreckt. Die Tragvorrichtung 402 ist in dem Schrumpfpress-Verfahren über die Hülse 4021 mit der Welle 413 verbunden. Die Hülse 4021 ist wie die Welle 413 aus einem metallischen Werkstoff. Bei einem vierten Ausführungsbeispiel eines Verfahrens zur Herstellung des Rotors 401 wird die Welle 413 abgekühlt und in der Tragvorrichtung 402 angeordnet. Nachdem sich die Welle 413 wieder erwärmt hat, ist an einer Grenzfläche 4131 zwischen der Welle 413 und der Hülse 4021 eine beständige flächige Verbindung zwischen der Welle 413 und der Tragvorrichtung 402 vorhanden. Der Rotor 401 weist einen entlang der Grenzfläche 405 verlaufenden radialen Spalt G auf, der mindestens 0,5 mm breit ist und mit dem Kunststoff ausgefüllt ist. Der radiale Spalt g ist an seiner engsten Stelle bemaßt. Da der Kunststoff im vierten Ausführungsbeispiel keinen Füllstoff aufweist, ist bei einem Ausfüllen des radialen Spalts g durch Spritzgießen eine Mindestbreite von 0,5 mm ausreichend. Die Breite des radialen Spalts g in dem vierten Ausführungsbeispiel mindestens 3 mm beträgt.

Ein fünftes Ausführungsbeispiel eines Rotors weist eine Ausführung gemäß FIG 3 auf, wobei die Hülse 4021 an ihrer dem Teil 406 zugewandten Fläche eine Rändelung aufweist. Bei einem fünften Ausführungsbeispiel eines Verfahrens zur Herstellung des fünften Ausführungsbeispiels des Rotors werden der Ringmagnet 403 und die Hülse 4021 in ein Spritzgusswerkzeug eingelegt, wobei das Spritzgusswerkzeug zum Formen der Tragvorrichtung 402 mit dem Kunststoff gefüllt wird. Durch die Rändelung wird eine Verbindung zwischen der Hülse 4021 und dem Teil 406 erreicht, die vorteilhaft kostengünstig ein Verbinden der Welle mit der Tragvorrichtung ermöglicht, da die Verbindung zwischen der Hülse 4021 und dem Teil 406 robuster ausgeführt ist.

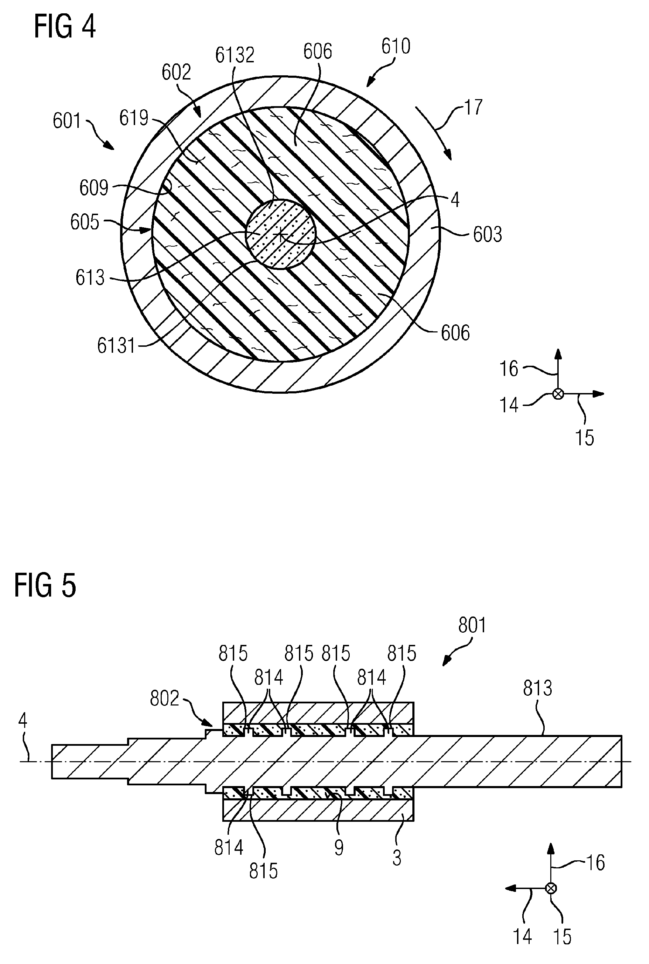

FIG 4 zeigt ein sechstes Ausführungsbeispiel eines Rotors 601. Dieses Ausführungsbeispiel weist Merkmale auf, die anhand der FIG 1 und 2 bereits beschrieben wurden. Diese sind in der FIG 4 nicht mit Bezugszeichen versehen, könnten aber mit den Bezugszeichen wie in FIG 1 und 2 versehen und mit der dazugehörigen Beschreibung beschrieben werden. Auf die dazu unterschiedlichen Merkmale wird nachfolgend anhand der FIG 4 eingegangen. Der Rotor 601 umfasst einen Ringmagneten 603, der zwei Seiten 609 und 610 aufweist, die in einem Querschnitt des Rotors 601 bzw. des Ringmagneten 603 konzentrisch zueinander sind. Bei einem sechsten Ausführungsbeispiel einer Verwendung des Ringmagneten 603 kann dieser vorteilhaft mit dieser geometrischen Form bei einer Ausgestaltung des Rotors 601 gemäß dem Ausführungsbeispiel der FIG 4 verwendet werden, da dessen der Tragvorrichtung 602 zugewandte Seite 609 eine vorgegebene Maßhaltigkeit aufweist, die eine große flächige Verbindung mit einem Schrumpfpressverfahren oder einem Klebeverfahren mit einer gleichmäßigen Dicke der Klebeschicht von 0,1 mm bis 0,2 mm entlang der Umfangsrichtung 17 des Rotors 601 ermöglicht.

Bei dem sechsten Ausführungsbeispiel des Rotors 601 ist die Tragvorrichtung 606 des Rotors 601 in einem Schrumpfpress-Verfahren mit dem Ringmagneten 603 und einem Klebeverfahren mit der Welle 613 verbunden. Der Rotor 601 weist die Welle 613 aus einem faserverstärkten Kunststoff, wobei die Tragvorrichtung 602 mit der Welle 613 verbunden ist und die Welle 613 innerhalb des Ringmagneten 603 angeordnet ist, wobei sich die Welle 613 entlang der Drehachse erstreckt. Die Welle 613 ist aus einem Epoxidharz mit langen Carbonfasern 6132 hergestellt, wobei die langen Carbonfasern 6132 länger als 50 mm sind. Die langen Carbonfasern 6132 erstrecken sich in der Welle 613 überwiegend entlang der Drehachse 4, um eine ausreichende Biegefestigkeit und Steifigkeit der Welle 613 zu erreichen. Das Teil 606 der Tragvorrichtung 602 weist einen Kunststoff auf, der ein Epoxidharz und als Füllstoff 619 Carbonfasern mit einer Länge bis zu 1 mm umfasst. Das Teil 606 ist durch Spritzgießen hergestellt. Bei einem sechsten Ausführungsbeispiel eines Verfahrens zur Herstellung des Rotors 601 wird die Tragvorrichtung 602 abgekühlt und in dem Ringmagneten 603 angeordnet. Nachdem sich die Tragvorrichtung 602 wieder erwärmt hat, ist an der gemeinsamen Grenzfläche 605 eine flächige Verbindung vorhanden. In einem anderen Verfahrensschritt des sechsten Ausführungsbeispiels wird an einer Grenzfläche 6131 zwischen der Tragvorrichtung 602 und der Welle 613 eine Klebeschicht mit einem Klebstoff ausgebildet.

In einem siebten Ausführungsbeispiel eines Rotors 601 oder eines Verfahrens zu seiner Herstellung oder einer Verwendung des Ringmagneten 603 die Welle 613 anstatt mit dem Klebeverfahren durch ein Schrumpfpress-Verfahren mit der Tragvorrichtung 602 verbunden werden. Hierbei ist vorteilhaft keine stoffschlüssige Verbindung zwischen der Tragvorrichtung 603 und der Welle 613 notwendig.

FIG 5 zeigt ein achtes Ausführungsbeispiel eines erfindungsgemäßen Rotors 801. Dieses Ausführungsbeispiel weist Merkmale auf, die anhand der FIG 1 und 2 bereits beschrieben wurden.

Diese sind in der FIG 5 nicht mit Bezugszeichen versehen, könnten aber mit den Bezugszeichen wie in FIG 1 und 2 versehen und mit der dazugehörigen Beschreibung beschrieben werden. Auf die dazu unterschiedlichen Merkmale wird nachfolgend anhand der FIG 5 eingegangen. Der Rotor 801 weist eine Welle 813 aus einem metallischen Werkstoff auf, wobei die Tragvorrichtung 802 mit der Welle 813 verbunden ist und die Welle 813 innerhalb des Ringmagneten 3 angeordnet ist, wobei sich die Welle 813 entlang der Drehachse 4 erstreckt. Der Kunststoff ist auf die Welle 813 aufgespritzt, wobei er Epoxidharz und Quarzmehl aufweist. Die Welle 813 weist eine formschlüssige Vorrichtung 814 auf, die sich an einer Grenzfläche 815 zu dem Kunststoff in einer Querschnittsebene bis zum Ringmagneten 3 erstrecken kann. Insbesondere ist der Abstand zwischen der Grenzfläche 815 und einer der Tragvorrichtung 802 zugewandten Fläche kleiner als 0,5 mm. Bei einem achten Ausführungsbeispiel eines Verfahrens zur Herstellung des Rotors 801 wird der Kunststoff auf die Welle 813 gespritzt, wobei eine Position einer Vorrichtung zum Aufspritzen des Kunststoffs in der Richtung 14 der Drehachse 4 entlang der Welle 813 geändert wird. Weiterhin wird die Welle 813 beim Aufspritzen um die Drehachse 4 mit unterschiedlichen Geschwindigkeiten und Verweilzeiten gedreht.

FIG 6 zeigt Ausführungsbeispiele elektrischer Maschinen 61, 64, 66, 68. Diese Ausführungsbeispiele weisen Merkmale auf, die anhand der FIG 1 bis 5 bereits beschrieben wurden. Diese sind in FIG 6 nicht mit Bezugszeichen versehen, könnten aber mit den Bezugszeichen wie in FIG 1 bis 5 versehen werden und mit der dazugehörigen Beschreibung beschrieben werden. Die elektrischen Maschinen 61, 64, 66, 68 sind für einen Industrieeinsatz geeignet, insbesondere in einer Werkzeugmaschine, Produktionsmaschine oder in einem Industrieroboter. Nachfolgend werden die elektrischen Maschinen anhand einer elektrischen Maschine beschrieben, wobei die Bezugszeichen aller Ausführungsbeispiele der elektrischen Maschine angegeben werden. Die Beschreibung des ersten Ausführungsbeispiels mit dem Bezugszeichen 61 kann auf die Bezugszeichen der Merkmale der elektrischen Maschine mit Bezugszeichen 61 beschränkt werden, indem die an zweiter bis vierter Stelle genannten Bezugszeichens eines Merkmals gestrichen werden. Entsprechend erhält man die Beschreibung für ein zweites Ausführungsbeispiel mit dem Bezugszeichen 64 durch Streichen der an erster Stelle und dritter und vierter Stelle genannten Bezugszeichen eines Merkmals. Die elektrischen Maschine 61, 64, 66, 68 umfasst einen Rotor 1, 401, 601, 801 und einen Stator 53, der in einem Betrieb der elektrischen Maschine 61, 64, 66, 68 über einen Luftspalt 54 mit dem Rotor 1, 401, 601, 801 magnetisch zusammenwirkt, wobei der Rotor 1, 401, 601, 801 um die Drehachse 4 drehbar gelagert ist. Der Rotor 1, 401, 601, 801 ist an der Welle 13, 413, 613, 813 befestigt und über diese mit einer ersten und einer zweiten Lagervorrichtung 58 um die Drehachse 4 drehbar in einem Gehäuse 52 der elektrischen Maschine 61, 64, 66, 68 gelagert. Der Stator 53 ist drehfest in dem Gehäuse 52 befestigt und weist mindestens eine Wicklung 55 auf, die sich in der Richtung 14 der Drehachse 4 entlang des Luftspalts 54 erstreckt. Die elektrische Maschine 61, 64, 66, 68 ist ein Servomotor, wobei die elektrische Maschine 61, 64, 66, 68 einen Geber 57 zum Erfassen einer Winkelposition, einer Drehgeschwindigkeit und einer Beschleunigung der Welle 13, 413, 613, 813 bei ihrer Drehbewegung um die Drehachse 4 aufweist. Der Rotor 1, 401, 601, 801 ermöglicht das Erreichen einer gewünschten Position der Welle 13, 413, 613, 813 mit hoher Dynamik und Präzision, indem er aufgrund seines geringen Trägheitsmoments und der vorteilhaften Vermeidung von durch Temperaturänderungen hervorgerufenen Schädigungen eine kurzzeitige Überlastung zum Erreichen der hohen Dynamik ermöglicht. Die kurzzeitige Überlastung führt zu einem starken Erhitzen des Rotors 1, 401,601,801. Die vorteilhafte Überlastfähigkeit ermöglicht in Verbindung mit dem Geber 57 ein Erreichen der gewünschten Position der Welle mit hoher Dynamik und Präzision über eine lange Lebensdauer der elektrischen Maschine 61, 64, 66, 68.

Obwohl die Erfindung im Detail durch die bevorzugten Ausführungsbeispiele näher beschrieben wurde, ist sie nicht auf die offenbarten Beispiele beschränkt. Andere Variationen können vom Fachmann hieraus abgeleitet werden, ohne den Schutzumfang der Erfindung zu verlassen.

## Patentansprüche

1. Rotor (1,401,601,801) für eine elektrische Maschine (61,64,66,68), der zur Vermeidung von durch Temperaturänderungen hervorgerufenen Schädigungen des Rotors (1,401,601,801) eine Tragvorrichtung (2,402,602,802) aufweist, umfassend
- einen Ringmagneten (3,403,603), der sich entlang einer Drehachse (4) des Rotors (1,401,601,801) erstreckt,
- wobei sich die Tragvorrichtung (2,402,602,802) zum drehfesten Verbinden einer Welle (13,413,613,813) mit dem Ringmagneten (3,403,603) entlang der Drehachse (4) des Rotors (1,401,601,801) erstreckt,
- wobei der Ringmagnet (3,403,603) und die Tragvorrichtung (2,402,602,802) eine gemeinsame Grenzfläche (5,405,605) aufweisen, durch die eine flächige Verbindung zwischen dem Ringmagneten (3,403,603) und der Tragvorrichtung (2,402,602,802) gebildet ist,
**dadurch gekennzeichnet, dass** die Tragvorrichtung (2,402,602,802) an der Grenzfläche (5,405,605) durch ein Teil (6,406,606) aus einem Kunststoff gebildet ist.

2. Rotor (1,401,601,801) nach Anspruch 1, wobei der Kunststoff einen Duroplasten aufweist.

3. Rotor (1,401,601,801) nach Anspruch 1 oder 2, wobei der Ringmagnet (3,403,603) ein gesinterter Magnet ist und der Kunststoff einen linearen Wärmeausdehnungskoeffizienten zwischen -2 x 10⁻⁶/K und 14 x 10⁻⁶/K aufweist.

4. Rotor (1,401,601,801) nach einem der vorhergehenden Ansprüche, wobei der Kunststoff einen Füllstoff (19,619) aufweist.

5. Rotor (1,401,801) nach einem der vorhergehenden Ansprüche, wobei der Rotor (1,401,801) die Welle (13,413,813) aus einem metallischen Werkstoff aufweist, wobei die Tragvorrichtung (2,402,802) mit der Welle (13,413,813) verbunden ist und die Welle (13,413,813) innerhalb des Ringmagneten (3,403) angeordnet ist, wobei sich die Welle (13,413,813) entlang der Drehachse (4) erstreckt.

6. Rotor (601) nach einem der Ansprüche 1 bis 4, wobei der Rotor (601) die Welle (613) aus einem faserverstärkten Kunststoff aufweist, wobei die Tragvorrichtung (602) mit der Welle (613) verbunden ist und die Welle (613) innerhalb des Ringmagneten (603) angeordnet ist, wobei sich die Welle (613) entlang der Drehachse (4) erstreckt.

7. Rotor (401,601,801) nach einem der vorhergehenden Ansprüche, wobei die Tragvorrichtung (402,602,802) in einem Schrumpfpress-Verfahren oder einem Klebeverfahren mit dem Ringmagneten (3,603) und/oder der Welle (413,613) verbunden ist.

8. Rotor (801) nach einem der Ansprüche 1 bis 6, wobei der Kunststoff auf die Welle (813) gespritzt ist.

9. Rotor (1,401) nach einem der Ansprüche 1 bis 6, wobei der Kunststoff an der gemeinsamen Grenzfläche (5,405) auf den Ringmagneten (3,403) aufgespritzt ist.

10. Rotor (1,401,601) nach einem der vorhergehenden Ansprüche, wobei der Rotor (1,401,601) einen entlang der Grenzfläche (5,405,605) verlaufenden radialen Spalt g aufweist, der mindestens 0,5 mm breit ist und mit dem Kunststoff ausgefüllt ist.

11. Rotor (1,401,601) nach Anspruch 10, wobei der Rotor (1,401,601) den entlang der Grenzfläche (5,405,605) verlaufenden radialen Spalt g aufweist, der mindestens 0,8 mm breit ist und mit dem Kunststoff ausgefüllt ist.

12. Rotor (1,601,801) nach einem der vorhergehenden Ansprüche, wobei die Tragvorrichtung (2,602,802) aus dem Teil (6,606) besteht.

13. Elektrische Maschine (61,64,66,68) für einen Industrieeinsatz, insbesondere in einer Werkzeugmaschine, Produktionsmaschine oder Industrieroboter, umfassend einen Rotor (1,401,601,801) nach einem der vorhergehenden Ansprüche, und
- einen Stator (53), der in einem Betrieb der elektrischen Maschine (61,64,66,68) über einen Luftspalt (54) mit dem Rotor (1,401,601,801) magnetisch zusammenwirkt,
- wobei der Rotor (1,401,601,801) um die Drehachse (4) drehbar gelagert ist.

14. Verfahren zur Herstellung eines Rotors (1,401,601,801) nach einem der Ansprüche 1 bis 12 für eine elektrische Maschine (61, 64, 66, 68),
- wobei die flächige Verbindung zwischen dem Ringmagneten (3,403,603) des Rotors (1,401,601,801) und der Tragvorrichtung (2,402,602,802) des Rotors (1,401,601,801) an der gemeinsamen Grenzfläche (5,405,605) des Ringmagneten (3,403,603) und der Tragvorrichtung (2,402,602,802) gebildet wird,
- wobei die Tragvorrichtung (2,402,602,802) an der Grenzfläche (5,405,605) mit dem Teil (6,406,606) aus dem Kunststoff gebildet wird.

15. Verwendung eines Ringmagneten (3,403,603) für einen Rotor (1,401,601,801) nach einem der Ansprüche 1 bis 12, wobei der Ringmagnet (3,403,603) bei dem Rotor (1,401,601,801) verwendet wird, der zur Vermeidung von durch Temperaturänderungen hervorgerufenen Schädigungen des Rotors (1,401,601,801) die Tragvorrichtung (2,402,602,802) aufweist, wobei die Tragvorrichtung (2,402,602,802) des Rotors (1,401,601,801) an der gemeinsamen Grenzfläche (5,405,605) mit dem Ringmagneten (3,403,603) durch das Teil (6,406,606) aus dem Kunststoff gebildet ist.
